# EUROPEAN PATENT SPECIFICATION

(11) **EP 1 444 831 B1**
(45) Date of publication and mention of the grant of the patent: **05.07.2006**
(21) Application number: 02781907.7
(22) Date of filing: 04.10.2002
(51) Int. Cl.: H04N 7/18

(54) **SECURITY SYSTEM AND WARNING METHOD USING EDGE DETECTION OF IMAGE SIGNAL**
SICHERHEITSSYSTEM UND WARNMETHODE MIT RANDERKENNUNG EINES BILDSIGNALS
SYSTEME DE SECURITE ET PROCEDE D'AVERTISSEMENT FAISANT APPEL A UNE DETECTION DE CONTOUR DE SIGNAL D'IMAGE

(30) Priority: 15.11.2001 KR 2001071116
(43) Date of publication of application: 11.08.2004
(73) Proprietor: Alogics Co. Ltd., Seongnam City, 463-050 Kyeonggi-Do (KR)
(72) Inventor: BOO, Byung Uk, Paldal-Gu, Suwon-Si, Kyunggi-Do 442-738 (KR)
(74) Representative: Grünecker, Kinkeldey, Stockmair & Schwanhäusser Anwaltssozietät
(86) International application number: PCT/KR2002/001852
(87) International publication number: WO 2003/043340

(56) References cited:
- JP-A- 8 317 373
- JP-A- 2001 266 273
- KR-A- 96 020 362
- KR-A- 99 047 793
- US-A- 4 160 998
- US-A- 4 161 750
- US-A- 4 198 653

## Description

### Technical Field

The present invention relates to a security system using video image signal capture, and more particularly to a warning generation method and a security system using edge detection of a video image signal, the method and system being capable of informing a surveillant of information indicating that a captured video image signal is inappropriate.

### Background Art

With the development of electric, electronic, computer and communication techniques, multimedia techniques for combining various information pieces such as video information, audio information, etc. are newly and rapidly developed. A DVR (Digital Video Recorder) has been developed by the advanced techniques described above. The DVR is employed in place of an existing security system, i.e., a CCTV (Closed Circuit Television) system for security and surveillance. The CCTV records and stores a video image for security and surveillance using an analog-type videotape, etc., while the DVR digitalizes the video image and stores the digitalized video image. The use of the DVR being a digital storage medium is increasing because the DVR can generally improve quality of an image based on the continuous recording and storing of the existing analog type.

Conventionally, a security system with a video capturing device and a recording device is used for monitoring a predetermined area or following a criminal in an apartment complex, store, bank or etc. Security systems are widely used, but various methods are used to block operations of the security systems. For example, one method for blocking an operation of the security system is to cut an output line of a video camera. Where the output line of the video camera is cut, there is a problem in that the criminal cannot be appropriately identified through the surveillance for the predetermined area, because an appropriate video image is not displayed on or recorded in a display or recorder.

As techniques for addressing the above-described problem, there is a method for generating a warning using a synchronous signal when an inappropriate video image signal is inputted.

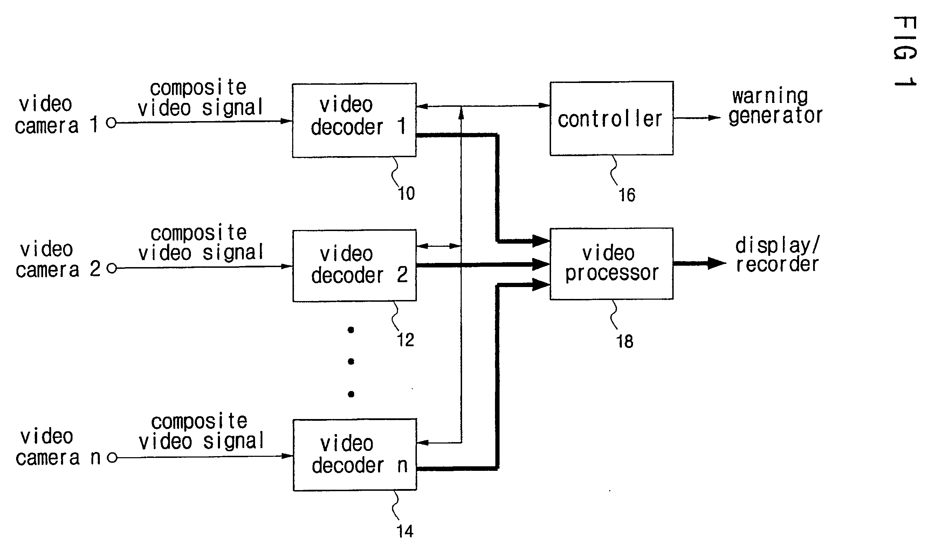

Fig. 1 illustrates an exemplary configuration of a system for carrying out a warning generation procedure adopted in a conventional security system.

In the conventional security system shown in Fig. 1, if video decoders 10, 12 and 14 receive composite video signals outputted from video cameras, and detect synchronous signals to output the detected synchronous signals, a controller 16 controls driving of a warning generator by determining whether horizontal synchronous signals are detected. Accordingly, because the horizontal synchronous signals cannot be detected where the criminal cuts output lines of the video cameras, a warning sound is outputted at predetermined periods, and a surveillant can perform an emergency action in response to the warning sound.

However, because an appropriate composite video signal is inputted when the criminal blinds a lens of a video camera by coating a foreign material or using a cover, the controller 16 cannot generate a warning sound. In this case, assuming that the surveillant does not perform the surveillance, the security system cannot be appropriately operated.

### Disclosure of the Invention

Therefore, the present invention has been made in view of the above problem, and it is an object of the present invention to provide a warning generation method and a security system using edge detection of a video image signal, the method and system being capable of sensing a blind state and informing a surveillant of an emergency situation when a video camera is blinded by covering a camera lens.

In accordance with one aspect of the present invention, the above and other objects can be accomplished by the provision of a method for generating a warning using edge detection in a security system for receiving video image signals outputted from a plurality of video cameras, and displaying or recording the video signals, comprising the steps of:
a) decoding video image signals and extracting luminance signals from the decoded video image signals;
b) filtering high-frequency components of the extracted luminance signals and detecting edge components within the video image signals; c) extracting only values within a range of a predetermined first threshold value from the detected edge components; d) accumulating the detected edge components for one video image; and e) operating a warning device if an accumulation value is smaller than a predetermined second threshold value.

In accordance with another aspect of the present invention, there is provided a security system, comprising: a plurality of video cameras for providing video image signals captured from surveillance areas; a plurality of video decoder for decoding video image signals from the video cameras and extracting luminance signals from the video image signals; and a blind detector for filtering a high-frequency component of the luminance signal extracted from a corresponding video decoder, detecting edge components from the video image signals, extracting only values within a range of a predetermined first threshold value, accumulating the extracted values for one video image, and generating a warning signal if an accumulation value is smaller than a predetermined second threshold value.

### Brief Description of the Drawings

The above and other objects, features and other advantages of the present invention will be more clearly understood from the following detailed description taken in conjunction with the accompanying drawings, in which:
Fig. 1 is a view illustrating an exemplary configuration of a system for carrying out a warning generation procedure adopted in a conventional security system;
Fig. 2 is a view illustrating an exemplary configuration of a security system in accordance with an embodiment of the present invention;
Fig. 3 is a flow chart illustrating a method for generating a warning using edge detection in accordance with an embodiment of the present invention; and
Fig. 4 is a view explaining the warning generation method in accordance with the embodiment of the present invention.

### Best Mode for Carrying Out the Invention

Now, preferred embodiments of the present invention will be described in detail with reference to the annexed drawings. In the following description, a detailed description of known functions and configurations incorporated herein will be omitted when it may make the subject matter of the present invention rather unclear.

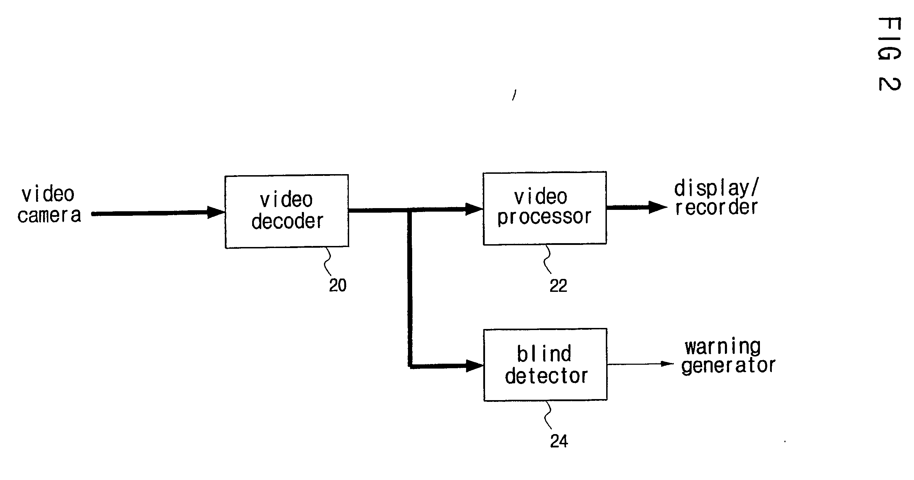

Fig. 2 is a view illustrating an exemplary configuration of a security system in accordance with an embodiment of the present invention. In detail, a blind detector 24 is added to a back stage of a video decoder 20 included in the conventional security system adopting a DVR (Digital Video Recorder).

Referring to Fig. 2, a video camera photographs a surveillance area and provides a captured video image signal in the form of a composite video signal. A plurality of video cameras can be conventionally installed according to the surveillance area.

One video decoder 20 corresponds to one video camera, and performs A/D (Analog/Digital) conversion and decoding for a composite video signal outputted from the video camera. The video decoder 20 detects a synchronous signal from the composite video signal, and extracts a luminance signal and a color signal from the composite video signal to output the extracted luminance and color signals.

A video processor 22 processes the decoded video image signal outputted from the video decoder 20 so that a divided screen image can be displayed on a display. The video processor 22 includes horizontal and vertical scalers, a frame memory and a memory controller, and also includes a moving picture compressor for compressing and storing a predetermined video image in a recorder, and a decompressor.

A blind detector 24 filters a high-frequency component of the luminance signal separated by the video decoder 20, detects edge components from video image signals, extracts only values of the edge components within a range of a predetermined first threshold value, accumulates the extracted values for one video image, and generates a warning signal where the accumulation value is smaller than a predetermined second threshold value. The blind detector 24 includes an HPF (High Pass Filter) arranged at its front stage to detect the edge components from the video image signals.

High-frequency components exist in the video image signals of an object's interface regions having different luminances. Thus, the present invention generates a warning sound based on the detection of a blind screen state by comparing a threshold value with an accumulation value of the detected edge components after filtering the extracted luminance signal on the basis of the HPF. The "blind screen state" is defined as a state when a camera lens is blinded by a cover.

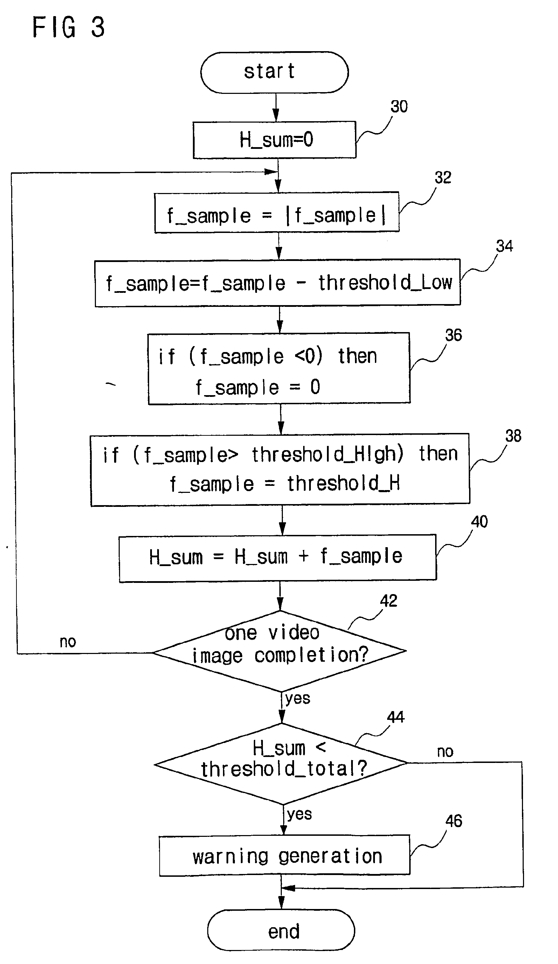

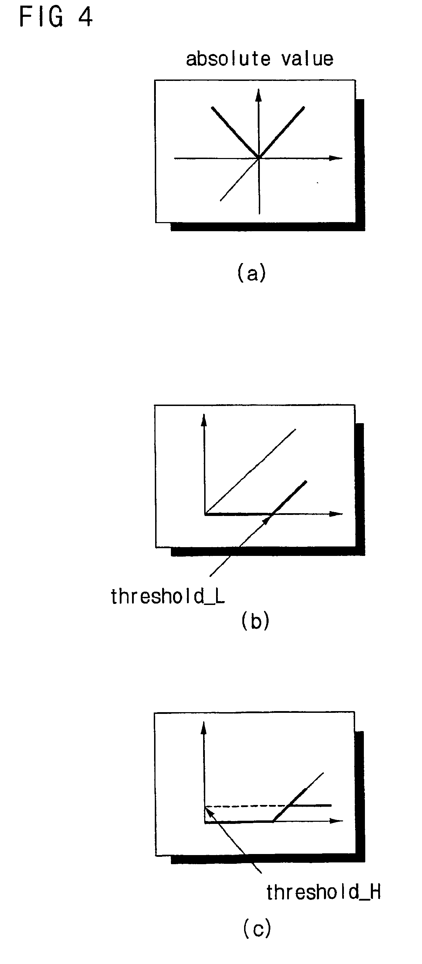

A method for generating a warning in the security system having the above-described system elements will be described with reference to Figs. 3 and 4. Fig. 3 is a flow chart illustrating a method for generating a warning using edge detection in accordance with an embodiment of the present invention; and Fig. 4 is a view explaining the warning generation method in accordance with the embodiment of the present invention.

Referring to Fig. 3, the present invention detects edge components from one video image, and determines, on the basis of a result of the detection, whether the warning should be generated. That is, if one video image is inputted, the blind detector 24 initializes an accumulation value (H-sum) to "0" at step 30. A high-frequency component of a luminance signal, inputted by the HPF arranged at a front stage of the blind detector 24, is filtered, and the edge components are detected from the video image. To extract a contour of an object from the video image, the present invention employs the HPF (e.g., H(z) = - 0.5z∼ + ∼1∼ -0.5z^ -1) for use in emphasizing a contour of a video image signal. The HPF can employ two filters to detect edge components in horizontal and vertical directions. In this case, an adder for adding outputs of the two filters is added. To simplify a configuration of hardware, an HPF for detecting only edge components of the horizontal direction can be employed.

As described above, if the HPF detects samples (f_sample) of the edge components, absolute values of the samples are obtained at step 32. A lower threshold value (threshold_Low) is subtracted from an absolute value of a sample, and a new sample value as a predetermined first threshold value is obtained at step 34. The reason why the lower threshold value is subtracted from the absolute value is to eliminate components of interface regions of an object, noise, etc., that are not actually viewable. If the new sample value is smaller than "0", the new sample value is set as "0" at step 36. If the new sample value (f_sample) obtained at the above step 34 is greater than a predetermined upper threshold value (threshold_High), the new sample value is set as the upper threshold value at step 38. The reason why the new sample value is set as the upper threshold value is to prevent a malfunction due to white noise contained in a video image having a contour component of a relative larger value, so that it cannot be not selected as an appropriate video image even though only part of the image has a clear contour component. Figs. 4(a), 4 (b) and 4 (c) are views explaining post-processing of the edge components detected through the HPF.

The present invention extracts only values within a range of a predetermined first threshold value from the edge components detected through the HPF, and an accumulation value (H_sum = H_sum + f_sample) for one video image is obtained from the extracted values at step 40. If all the edge components for one video image have been accumulated at the step 42, the blind detector 24 determines, at step 44, whether an accumulation value (H_sum) of the edge components for the one video image is smaller than a predetermined second threshold value (threshold_total). The second threshold value (threshold_total) can be variably set according to a screen video image captured by a video camera. As a result of the determination at the above step 44, if the accumulation value of the edge components for one video image is smaller than the predetermined second threshold value, the blind detector 24 outputs a warning signal to a warning generator in order to enable the warning generator to generate a predetermined warning sound at step 46.

Thus, the surveillant receives the warning sound and can perform a rapid action in response to an emergency situation.

### Industrial Applicability

As apparent from the above description, the present invention can maximize efficiency of a security system by determining an inappropriate signal input to generate a warning sound, even though an intruder blinds a camera lens using a cover.

Although the preferred embodiments of the present invention have been disclosed for illustrative purposes, those skilled in the art will appreciate that various modifications, additions and substitutions are possible, without departing from the scope of the invention.

## Claims

1. A method for generating a warning of the blind state of a video camera using edge detection in a security system for receiving video image signals outputted from a plurality of video cameras, and displaying or recording the video image signals, comprising the steps of:
a) decoding video image signals and extracting luminance signals from the decoded video image signals;
b) filtering high-frequency components of the extracted luminance signals and detecting edge components within the video image signals;
c) extracting only values within a range of a predetermined first threshold value from the detected edge components;
d) accumulating the detected edge components for one video image; and
e) operating a warning device if an accumulation value is smaller than a predetermined second threshold value.

2. The method as set forth in claim 1, wherein the range of the first threshold value includes an upper threshold value and a lower threshold value for use in removing white noise and a luminance component, which cannot be identified.

3. The method as set forth in claim 1, wherein the second threshold value is variably set according to a screen video image captured by a video camera.

4. A security system, comprising:
a plurality of video cameras for providing video image signals captured from surveillance areas;
a plurality of video decoder for decoding video image signals from the video cameras and extracting luminance signals from the video image signals; and
a blind detector for filtering a high-frequency component of the luminance signal extracted from a corresponding video decoder, detecting edge components from the video image signals, extracting only values within a range of a predetermined first threshold value, accumulating the extracted values for one video image, and generating a warning signal if an accumulation value is smaller than a predetermined second threshold value.

5. The security system as set forth in claim 4, wherein the second threshold value is variably set according to a screen video image captured by a video camera.

## Patentansprüche

1. Verfahren zum Erzeugen einer Warnung über den blinden Zustand einer Videokamera unter Verwendung von Kantenerkennung in einem Sicherheitssystem, das Videobildsignale empfängt, die von einer Vielzahl von Videokameras ausgegeben werden, und die Videobildsignale anzeigt oder aufzeichnet, wobei es die folgenden Schritte umfasst:
a) Decodieren von Videobildsignalen und Extrahieren von Luminanzsignalen aus den decodierten Videobildsignalen;
b) Filtern von Hochfrequenzkomponenten der extrahierten Luminanzsignale und Erkennen von Kantenkomponenten in den Videobildsignalen;
c) ausschließliches Extrahieren von Werten innerhalb eines Bereiches eines vorgegebenen ersten Schwellenwertes aus den erkannten Kantenkomponenten;
d) Akkumulieren der erkannten Kantenkomponenten für ein Videobild; und
e) Betätigen einer Warnvorrichtung, wenn ein Akkumulationswert geringer ist als ein vorgegebener zweiter Schwellenwert.

2. Verfahren nach Anspruch 1, wobei der Bereich des ersten Schwellenwertes einen oberen Schwellenwert und einen unteren Schwellenwert zur Verwendung beim Entfernen von weißem Rauschen und einer Luminanzkomponente einschließt, die nicht identifiziert werden können.

3. Verfahren nach Anspruch 1, wobei der zweite Schwellenwert entsprechend einem mit einer Videokamera erfassten Bildschirm-Videobild variabel eingestellt wird.

4. Sicherheitssystem, das umfasst:
eine Vielzahl von Videokameras, die Videobildsignale bereitstellen, die aus Überwachungsbereichen erfasst werden;
eine Vielzahl von Video-Decodern, die Videobildsignale von den Videokameras decodieren und Luminanzsignale aus den Videobildsignalen extrahieren; und
einen Blind-Detektor, der eine Hochfrequenzkomponente des von einem entsprechenden Video-Decoder extrahierten Luminanzsignals filtert, Kantenkomponenten aus den Videobildsignalen erkennt, ausschließlich Werte innerhalb eines Bereiches eines vorgegebenen ersten Schwellenwertes extrahiert, die extrahierten Werte für ein Videobild akkumuliert und ein Warnsignal erzeugt, wenn ein Akkumulationswert geringer ist als ein vorgegebener zweiter Schwellenwert.

5. Sicherheitssystem nach Anspruch 4, wobei der zweite Schwellenwert entsprechend einem mit einer Videokamera erfassten Bildschirm-Videobild variabel eingestellt wird.

## Revendications

1. Procédé permettant de produire un avertissement en ce qui concerne l'état aveugle d'une caméra vidéo en utilisant une détection de bord dans un système de sécurité servant à recevoir des signaux d'images vidéo délivrés par une pluralité de caméras vidéo, et afficher ou enregistrer les signaux d'images vidéo, le procédé comprenant les opérations suivantes :
a) décoder les signaux d'images vidéo et extraire les signaux de luminance des signaux d'images vidéo décodés ;
b) filtrer les composantes de haute fréquence des signaux de luminance extraits et détecter les composantes de bord à l'intérieur des signaux d'images vidéo ;
c) extraire, des composantes de bord détectées, les seules valeurs comprises à l'intérieur d'un intervalle d'une première valeur de seuil prédéterminée ;
d) accumuler les composantes de bord détectées relatives à une seule image vidéo ; et
e) activer le dispositif d'avertissement si une valeur d'accumulation est plus petite qu'une deuxième valeur de seuil prédéterminée.

2. Procédé selon la revendication 1, où l'intervalle de la première valeur de seuil comporte une valeur de seuil supérieure et une valeur de seuil inférieure destinées à être utilisées pour enlever le bruit blanc et une composante de luminance, qui ne peuvent être identifiées.

3. Procédé selon la revendication 1, où la deuxième valeur de seuil est fixée de manière variable en fonction de l'image vidéo d'écran captée par une caméra vidéo.

4. Système de sécurité, comprenant :
une pluralité de caméras vidéo servant à produire des signaux d'images vidéo captés à partir d'aires de surveillance ;
une pluralité de décodeurs vidéo servant à décoder des signaux d'images vidéo venant des caméras vidéo et à extraire des signaux de luminance à partir des signaux d'images vidéo ; et
un détecteur aveugle servant à filtrer une composante de haute fréquence du signal de luminance extrait à partir d'un décodeur vidéo correspondant, à détecter les composantes de bord à partir des signaux d'images vidéo, à extraire les seules valeurs comprises à l'intérieur d'un intervalle d'une première valeur de seuil prédéterminée, à accumuler les valeurs extraites pour une seule image vidéo, et à produire un signal d'avertissement si une valeur d'accumulation est plus petite qu'une deuxième valeur de seuil prédéterminée.

5. Système de sécurité selon la revendication 4, où la deuxième valeur de seuil est fixée de manière variable en fonction d'une image vidéo d'écran captée par une caméra vidéo.
